# FASCICULE DE BREVET EUROPEEN

(11) **EP 0 995 361 B1**
(45) Date de publication et mention de la délivrance du brevet: **03.12.2003**
(21) Numéro de dépôt: 99490030.6
(22) Date de dépôt: 21.10.1999
(51) Int. Cl.: A23N 12/02

(54) **Procédé et dispositif de traitement de produits alimentaires tels que, notamment des légumes chargés d'impuretés, par exemple, engrais et/ou pesticides**
Verfahren und Vorrichtung zur Behandlung von Nahrungsmitteln sowie insbesondere von Schadstoff belastetem Gemüse, z.B. Dünger- und/oder Schädlingsbekämpfungsmittel
Process and device for the treatment of food products like, in particular, vegetables containing impurities, i.e. fertilizers and/or pesticides

(30) Priorité: 23.10.1998 FR 9813460
(43) Date de publication de la demande: 26.04.2000
(73) Titulaire: Bonduelle Société Anonyme, 59173 Renescure (FR)
(72) Inventeur: Maureaux, Alain, 59173 Renescure (FR); Bracquart, Jacques, 59173 Renescure (FR); Chauchard, Edith, 59173 Renescure (FR)
(74) Mandataire: Duthoit, Michel

(56) Documents cités:
- US-A- 1 944 876
- US-A- 1 983 478
- US-A- 5 161 558

## Description

L'invention concerne un procédé et un dispositif de traitement de produits alimentaires tels que, notamment, des légumes chargés d'impuretés, par exemple, engrais et/ou pesticides, comme décrit dans US 5 161 558.

Il s'agit, notamment, d'épinards chargés en nitrates.

Toutefois, bien que plus particulièrement prévue pour de telles applications, elle pourra également être utlisée pour tout autre type de produits alimentaires.

Actuellement, pour réaliser la dénitrification des épinards, il est connu des procédés discontinus selon lesquels les épinards sont plongés dans une cuve de lavage.

Il est également connu d'utiliser un bain de lavage dans lequel les épinards circulent en continu, maintenus dans un support perméable.

Toutefois, une telle solution présente de nombreux inconvénients. En effet, les temps de traitement sont longs. De plus, le bain de lavage se charge rapidement en nitrates ce qui peut conduire à des saturations.

Il est également à noter qu'en cas d'utilisation d'un tel procédé pour obtenir un blanchiment simultané des épinards grâce à l'utilisation d'un bain de lavage à haute température, le maintien de celle-ci entraîne une grande consommation d'énergie.

Le but de la présente invention est de proposer un procédé et un dispositif de traitement de produits alimentaires, tels que, notamment des légumes, chargés d'impuretés, par exemple engrais et/ou pesticides, qui pallient les inconvénients précités et facilitent le départ desdites impuretés.

Un autre but de la présente invention est de proposer un procédé et un dispositif de traitement de produits alimentaires tels que, notamment des légumes chargés d'impuretés, par exemple, engrais et/ou pesticides, qui fonctionnent en continu et soient efficaces avec un temps de traitement limité.

Un autre but de la présente invention est de proposer un procédé et un dispositif de traitement de produits alimentaires tels que, notamment des légumes chargés d'impuretés, par exemple engrais et/ou pesticides, qui autorisent une limitation de la consommation de liquide de traitement.

Un autre but de la présente invention est de proposer un procédé et un dispositif de traitement de produits alimentaires tels que, notamment des légumes chargés d'impuretés, par exemple engrais et/ou pesticides, qui autorisent le départ desdites impuretés et simultanément le blanchiment des légumes, tout en permettant une limitation de l'énergie consommée à cette fin et une diminution du temps de blanchiment pour préserver la texture des produits et limiter les pertes de matière.

D'autres buts et avantages de l'invention apparaîtront au cours de la description qui va suivre qui n'est donnée qu'à titre indicatif et qui n'a pas pour but de la limiter.

L'invention concerne tout d'abord un procédé de traitement de produits alimentaires, tels que, notamment des légumes chargés d'impuretés, par exemple engrais et/ou pesticides, dans lequel :
- on prévoit un flux dedits produits alimentaires, entraînés sur un support,
- on arrose lesdits produits d'un liquide de traitement apte à se charger desdites impuretés,
- on ajuste le taux d'impuretés présent dans ledit liquide après arrosage et on le recircule.

L'invention concerne également un dispositif pour la mise en oeuvre du procédé décrit plus haut de traitement de produits alimentaires tels que, notamment des légumes chargés d'impuretés, par exemple engrais et/ou pesticides, comprenant :
- des moyens pour arroser un flux de produits alimentaires entraînés sur un support d'un liquide de traitement, apte à se charger desdites impuretés,
- des moyens pour ajuster le taux d'impuretés présent dans le liquide de traitement après arrosage,
- des moyens pour recirculer le liquide de traitement après ajustement de son taux d'impuretés.

L'invention sera mieux comprise à la lecture de la description suivante, accompagnée du dessin en annexe qui en fait partie intégrante et qui illustre de manière schématique un exemple de réalisation du dispositif de traitement conforme à l'invention.

L'invention concerne tout d'abord un procédé de traitement de produits alimentaires, tels que, notamment des légumes chargés d'impuretés, par exemple, engrais et/ou pesticides.

Il s'agit, par exemple, d'épinards chargés de nitrates.

Toutefois, bien que plus particulièrement prévue pour de telles applications, elle pourra également être utilisée pour tout autre type de produits alimentaires.

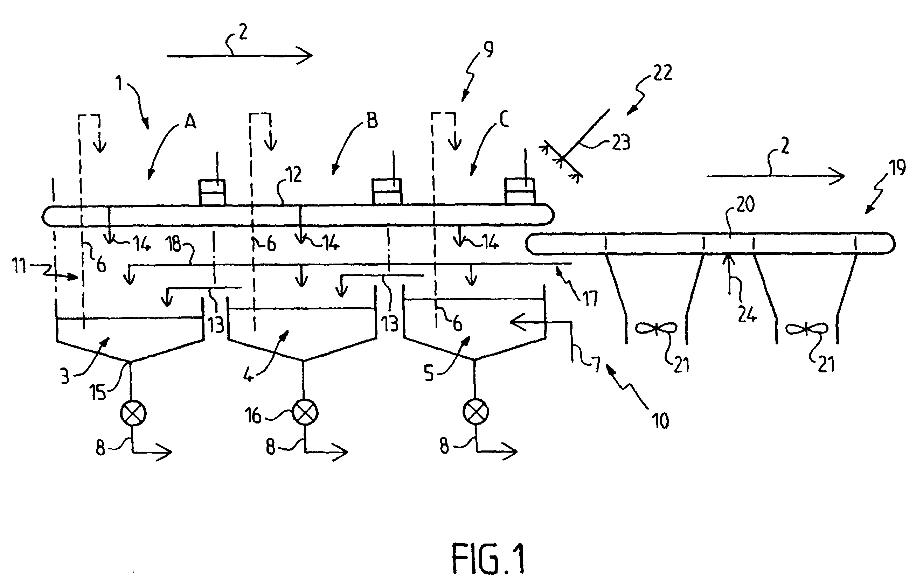

Comme illustré à la figure 1, on prévoit un flux dedits produits alimentaires, entraînés notamment en continu sur un support 1.

Ledit flux présente, par exemple, une épaisseur de 5 à 30 cm, notamment 10 à 20 cm. Il est, par exemple, sensiblement plan et orienté selon une direction de progression donnée repérée 2. Dans le reste du texte, celle-ci définit la notion d'amont et d'aval.

Afin que les produits alimentaires soient débarrassés de leurs impuretés, on arrose ceux-ci d'un liquide de traitement apte à se charger desdites impuretés. Il s'agit, notamment, d'eau.

On ajuste alors le taux d'impuretés présent dans ledit liquide après arrosage puis on le recircule. On bénéficie ainsi d'un procédé de traitement rapide et économique en liquide de traitement.

Selon le mode de réalisation illustré, on prévoit différentes étapes successives d'arrosage, repérées A, B, C, on récolte, dans différentes zones 3, 4, 5 dites zones de déconcentration, le liquide chargé en impuretés provenant respectivement de chacune des étapes d'arrosage A, B, C et on ajuste ledit taux d'impuretés, zone par zone, avant recirculation du liquide de traitement. On prévoit, par exemple, trois étapes successives d'arrosage et trois zones de déconcentration.

La zone 5 se trouvant le plus en aval et celle présentant le taux d'impuretés le plus faible.

Selon ce mode de réalisation, après ajustement du taux d'impuretés, on recircule le liquide de chacune des zones de déconcentration 3, 4, 5, par exemple respectivement vers l'étape d'arrosage A, B, C dont il provient, comme illustré par les flèches repérées 6.

On ajuste ledit taux d'impuretés, notamment, par apport de liquide en provenance d'une zone 3, 4 de déconcentration aval et/ou de liquide propre, comme illustré par la flèche repérée 7. Ledit apport en liquide propre est prévu, notamment, au niveau de chacune desdites zones 3, 4, 5 ou uniquement au niveau de la zone 5 la plus en aval.

En cas de risque de débordement et/ou de taux trop importants d'impuretés dans l'une des zones 3, 4, 5, on pourrait évacuer ledit liquide vers l'égout, comme illustré par les flèches repérées 8.

Afin de favoriser l'élimination des impuretés, ledit liquide de traitement est éventuellement prévu chauffé. L'utilisation de liquide chauffé permet en outre, si désiré, d'obtenir un blanchiment desdits produits.

Les temps de traitement sont, notamment, de 30 sec à 6 mn. Ils sont adaptés à l'épaisseur du flux. De manière avantageuse, ils ne doivent pas entraîner la cuisson desdits produits alimentaires. La température du liquide de traitement se situe, par exemple, entre 60 et 100 °C.

Le blanchiment proprement dit a lieu éventuellement dans la dernière étape d'arrosage C. Celle-ci dure alors, par exemple, 30 secondes à 2 minutes, à une température allant de, notamment, 85 °C à 95 °C.

Grâce à la recirculation du liquide de traitement, on constate que l'invention permet en outre une diminution de l'énergie consommée. A cette fin, on pourra également, si désiré, récupérer les calories du liquide de traitement évacué vers l'égout.

On adapte éventuellement la température dudit liquide de traitement en fonction de l'étape d'arrosage A, B, C dans laquelle il est utilisé. La température de la dernière étape est ainsi choisie, éventuellement, supérieure aux autres.

Le liquide propre éventuellement utilisé pour réaliser un apport afin d'ajuster le taux d'impuretés est prévu, par exemple, préchauffé.

On refroidit en outre, éventuellement, lesdits produits alimentaires après blanchiment.

Pour faciliter cette étape, on pourra alors notamment, décompacter le flux de produits et/ou diminuer son épaisseur au moins au moment de la transition entre le blanchiment et le refroidissement.

L'ensemble du traitement est réalisé, par exemple, à pression atmosphérique.

L'invention concerne également un dispositif pour la mise en oeuvre du procédé décrit plus haut. Il comprend tout d'abord des moyens 9 pour arroser le flux de produits alimentaires entraînés sur le support 1 d'un liquide de traitement, apte à se charger desdites impuretés. Lesdits moyens pour arroser sont constitués, notamment, de buses d'aspersion.

Le dispositif conforme à l'invention comprend également des moyens 10 pour ajuster le taux d'impuretés présent dans le liquide de traitement après arrosage et des moyens 11 pour recirculer ledit liquide de traitement après ajustement de son taux d'impuretés.

Ledit support 1 est constitué, notamment, d'une bande transporteuse 12, prévue dans une enceinte non représentée.

Selon le mode de réalisation illustré, ledit dispositif comprend des compartiments successifs d'arrosage A, B, C, munis dedits moyens pour arroser 9, communiquant avec des bacs 3, 4, 5 de déconcentration pour récolter le liquide chargé en impuretés provenant respectivement de chacun desdits compartiments A, B, C. Desdits moyens pour ajuster 10 le taux d'impuretés sont prévus, notamment, pour chacun desdits bacs 3, 4, 5.

Il s'agit, par exemple de trois compartiments A, B, C, et de trois bacs 3, 4, 5.

Lesdits moyens pour recirculer 11 sont constitués, par exemple, d'une pompe et/ou d'un conduit prévu entre les bacs de déconcentration 3, 4, 5 et les moyens d'arrosage 9 des compartiments A, B, C.

Lesdits moyens 10 pour ajuster le taux d'impuretés sont constitués,notamment, d'un conduit d'arrivée de liquide propre, au moins prévu au niveau du bac 5 récoltant le liquide du compartiment C le plus en aval. Il pourra éventuellement être prévu undit conduit d'arrivée de liquide propre au niveau de chacun desdits bacs 3, 4, 5.

Lesdits moyens 10 pour ajuster le taux d'impuretés sont constitués en outre, éventuellement, par lesdits bacs 3, 4, 5 eux-mêmes, prévus aptes à permettre une communication de liquide de traitement des bacs aval vers les bacs amont comme illustrés par les flèches repérées 13.

Pour cela, lesdits bacs 3, 4, 5 sont, notamment, prévus contigüs et/ou communiquant par déversement de l'aval vers l'amont. Ils sont situés, notamment, sous chaque dit compartiment A, B, C dont il récolte le liquide de traitement comme illustré par les flèches repérées 14.

Afin d'éviter le débordement desdits bacs 3, 4, 5, un orifice 15 de vidange est prévu, par exemple, dans le fond de chacun desdits bacs 3, 4, 5. Ladite vidange pourra être contrôlée, éventuellement, grâce à des vannes 16 coopérant avec lesdits bacs 3, 4, 5. Lesdites vannes 16 pourront également jouer un rôle dans l'ajustement du taux d'impuretés.

Desdits moyens 11 pour recirculer sont prévus, par exemple, entre chaque compartiment A, B, C et le bac 3, 4, 5 correspondant.

Si l'on souhaite blanchir simultanément lesdits produits alimentaires, le dispositif conforme à l'invention pourra en outre comprendre des moyens 17 de chauffage du liquide de traitement. Ils sont constitués, notamment, d'un conduit 18 d'apport de vapeur.

Ledit conduit 18 permet, par exemple, de régler la température du liquide de traitement dans chacun desdits bacs 3, 4, 5. On peut ainsi avoir une température contrôlée de manière distincte pour chacun des compartiments A, B, C.

L'invention comprend en outre, éventuellement, des moyens de refroidissement 19 des produits alimentaires après blanchiment. Ils sont constitués, notamment d'un tapis de refroidissement 20, prévu à l'air libre et/ou arrosé d'un liquide de refroidissement, notamment de l'eau aspergée. Ledit tapis de refroidissement 20 est, par exemple, entraîné en continu.

Lesdits moyens pour refroidir 19 sont en outre constitués, par exemple, de souffleries 21 prévues sous ledit tapis de refroidissement, notamment travaillant en dépression.

Afin de faciliter le refroidissement, des moyens 22 pour décompacter le flux de produits alimentaires pourront éventuellement être utilisés. Il s'agit, par exemple, d'un organe 23 d'aspersion prévu entre ledit tapis d'arrosage 12 et ledit tapis de refroidissement 20. Il pourra encore s'agir, notamment, de buses 24 d'éjection d'air sous ledit tapis de refroidissement 20, par exemple prévues entre lesdites souffleries 21.

Il est prévu, notamment, deux dites souffleries 21 placées l'une derrière l'autre dans le sens de progression du flux 2.

Afin de faciliter le refroidissement, on pourra encore diminuer l'épaisseur du flux de produits alimentaires, par exemple en utilisant une vitesse d'entraînement plus rapide pour ledit tapis de refroidissement 20 que pour ledit tapis d'arrosage 12.

## Revendications

1. Procédé de traitement de produits alimentaires, tels que, notamment des légumes chargés d'impuretés, par exemple engrais et/ou pesticides, dans lequel :
- on prévoit un flux dedits produits alimentaires, entraînés sur un support (1),
- on arrose lesdits produits d'un liquide de traitement, apte à se charger desdites impuretés,
- on ajuste le taux d'impuretés présent dans ledit liquide de traitement après arrosage et on le recircule.

2. Procédé selon la revendication 1, dans lequel on prévoit différentes étapes successives d'arrosage (A, B, C), on récolte dans différentes zones (3, 4, 5) dites zones de déconcentration, le liquide chargé en impuretés provenant respectivement de chacune des étapes d'arrosage (A, B, C) et on ajuste ledit taux d'impuretés, zone par zone, avant recirculation du liquide de traitement.

3. Procédé selon la revendication 2, dans lequel on recircule le liquide de chacune des zones de déconcentration (3, 4, 5) respectivement vers l'étape d'arrosage (A, B, C) dont il provient, après ajustement de son taux d'impuretés.

4. Procédé selon la revendication 2, dans lequel on ajuste ledit taux d'impuretés par apport de liquide en provenance d'une zone de déconcentration aval et/ou de liquide propre.

5. Procédé selon la revendication 2, dans lequel ledit liquide de traitement est prévu chauffé de manière à obtenir le blanchiment desdits produits alimentaires simultanément à leur arrosage.

6. Procédé selon la revendication 5, dans lequel on adapte la température du liquide de traitement en fonction de l'étape d'arrosage dans laquelle il est utilisé.

7. Procédé selon la revendication 5, dans lequel on refroidit lesdits produits alimentaires après blanchiment.

8. Procédé selon la revendication 7, dans lequel on décompacte le flux de produits et/ou on diminue son épaisseur au moins au moment de la transition entre le blanchiment et le refroidissement.

9. Dispositif pour la mise en oeuvre du procédé selon la revendication 1 de traitement de produits alimentaires tels que, notamment, des légumes chargés d'impuretés, par exemple, engrais et/ou pesticides, comprenant :
- des moyens (9) pour arroser un flux de produits alimentaires entraînés sur un support (1) d'un liquide de traitement, apte à se charger desdites impuretés,
- des moyens (10) pour ajuster le taux d'impuretés présent dans le liquide de traitement après arrosage,
- des moyens (11) pour recirculer le liquide de traitement après ajustement de son taux d'impuretés.

10. Dispositif selon la revendication 9, comprenant des compartiments successifs d'arrosage (A, B, C), munis dedits moyens pour arroser (9), communiquant avec des bacs (3, 4, 5) de déconcentration pour récolter le liquide chargé en impuretés provenant respectivement de chacun desdits compartiments (A, B, C), desdits moyens pour ajuster (10) le taux d'impuretés étant prévu dans chacun desdits bacs (3, 4, 5).

11. Dispositif selon la revendication 10, dans lequel lesdits moyens (10) pour ajuster le taux d'impuretés sont constitués par un conduit d'arrivée de liquide propre au moins prévu au niveau du bac (5) récoltant le liquide du compartiment C le plus en aval.

12. Dispositif selon la revendication 11, dans lequel lesdits moyens (10) pour ajuster le taux d'impuretés sont constitués en outre par lesdits bacs (3, 4, 5) prévus aptes à permettre une communication de liquide de traitement des bacs aval vers les bacs amont.

13. Dispositif selon la revendication 10, dans lequel lesdits moyens (10) pour ajuster le taux d'impuretés sont constitués en outre de vannes (16), coopérant avec lesdits bacs (3, 4, 5) et prévues aptes à contrôler leur vidange.

14. Dispositif selon la revendication 10, dans lequel lesdits moyens (11) pour recirculer sont prévus entre chaque compartiment (A, B, C) et le bac (3, 4, 5) correspondant.

15. Dispositif selon la revendication 9, comprenant en outre des moyens de chauffage du liquide de traitement pour le blanchiment desdits produits.

16. Dispositif selon la revendication 15, comprenant en outre des moyens de refroidissement des produits alimentaires après blanchiment.

## Patentansprüche

1. Verfahren zur Behandlung von Nahrungsmitteln, wie nämlich mit Unreinigkeiten, z.B. Dungemitteln und/oder Pestiziden, beladen Gemüse, bei dem :
ein Fluß von auf einer Tragfläche (1) fortgetriebenen, genannten Nahrungsmitteln vorgesehen wird,
die genannten Produkte mit einer Behandlungsflüssigkeit, geeignet sich mit den genannten Unreinigkeiten zu beladen, besprüht werden,
die Rate der nach der Besprühung in der genannten Behandlungsflüssigkeit vorhandenen Unreinigkeiten justiert und diese letzte zurückgeführt wird.

2. Verfahren nach Anspruch 1, bei dem verschiedene aufeinanderfolgende Besprühungsschritte (A, B, C) vorgesehen werden, die respektive von jedem der Besprühungsschritte (A, B, C) stammende, mit Unreinigkeiten beladene Flüssigkeit in verschiedenen Bereichen (3, 4, 5), die als Dekonzentrationsbereiche bezeichnet werden, gesammelt wird und die genannte Unreinigkeitsrate vor der Zurückführung der Behandlungsflüssigkeit pro Bereich justiert wird.

3. Verfahren nach Anspruch 2, bei dem die Flüssigkeit von jedem der Dekonzentrationsbereiche (3, 4, 5) nach Justierung ihrer Unreinigkeitsrate respektive zum Besprühungsschritt (A, B, C), von dem sie herstammt, zurückgeführt wird.

4. Verfahren nach Anspruch 2, bei dem die genannte Unreinigkeitsrate durch Zufuhr von Flüssigkeit aus einem stromabwärtsen Dekonzentrationsbereich und/oder sauberer Flüssigkeit justiert wird.

5. Verfahren nach Anspruch 2, bei dem die Behandlungsflüssigkeit geheizt vorgesehen ist, derart, daß das Blanchieren der genannten Nahrungsmittel gleichzeitig zu ihrer Besprühung erhalten wird.

6. Verfahren nach Anspruch 5, bei dem die Temperatur der Behandlungsflüssigkeit in Abhängigkeit vom Besprühungsschritt, in dem sie verwendet wird, angepaßt ist.

7. Verfahren nach Anspruch 5, bei dem die Nahrungsmittel nach dem Blanchieren abgekühlt werden.

8. Verfahren nach Anspruch 7, bei dem wenigstens beim Übergang vom Blanchieren zur Abkühlung der Produktenfluß lockerer gemacht und/oder seine Dicke vermindert wird.

9. Vorrichtung zur Anwendung des Verfahrens nach Anspruch 1 zur Behandlung von Nahrungsmitteln, wie nämlich mit Unreinigkeiten, z.B. Dungemitteln und/oder Pestiziden, beladen Gemüse, umfassend :
- Mittel (9) zum Besprühen eines Flußes von auf einer Tragfläche (1) fortgetriebenen Nahrungsmitteln mit einer Behandlungsflüssigkeit, geeignet sich mit den genannten Unreinigkeiten zu beladen,
- Mittel (10) zum Justieren der Rate der nach der Besprühung in der Behandlungsflüssigkeit vorhandenen Unreinigkeiten,
- Mittel ( 11 ) zum Zurückführen der Behandlungsflüssigkeit nach dem Justieren derer Unreinigkeitesrate.

10. Vorrichtung nach Anspruch 9, umfassend aufeinanderfolgende, mit genannten Mitteln zur Besprühung (9) versehene Besprühungsfächer (A, B, C), die mit Dekonzentrationswannen (3, 4, 5) zum Sammeln der respektive von jedem der genannten Fächer (A, B, C) stammende, mit Unreinigkeiten beladene Flüssigkeit in Verbindung stehen, wobei Mittel zum Justieren (10) der Unreinigkeitsrate in jedem der genannten Wannen (3, 4, 5) vorgesehen sind.

11. Vorrichtung nach Anspruch 10, bei der die genannten Mittel (10) zum Justieren der Unreinigkeitsrate aus einer Zufuhrleitung für saubere Flüssigkeit besteht, die wenigstens im Bereich der Wanne (5), die die Flüssigkeit aus dem meist stromabwärtsen Fach C sammelt, vorgesehen ist.

12. Vorrichtung nach Anspruch 10, bei der die genannten Mittel (10) zum Justieren der Unreinigkeitsrate außerdem aus den genannten Wannen (3, 4, 5) bestehen, die geeignet vorgesehen sind, eine behandlungsflüssigkeitsmäßige Verbindung von den stromabwärtsen Wannen zu den stromaufwärtsen Wannen zu erlauben.

13. Vorrichtung nach Anspruch 10, bei der die genannten Mittel (10) zum Justieren der Unreinigkeitsrate außerdem aus Ventilen (16) bestehen, die mit den genannten Wannen (3, 4, 5) zusammenwirken und geeignet vorgesehen sind, deren Entleeren zu steuern.

14. Vorrichtung nach Anspruch 10, bei der die genannten Mittel (11) zum Zurückführen zwischen jedem Fach (A, B, C) und der entsprechenden Wanne (3, 4, 5) vorgesehen sind.

15. Vorrichtung nach Anspruch 9, umfassend außerdem Mittel zum Aufheizen der Behandlungsflüssigkeit zwecks des Blanchierens der genannten Produkte.

16. Vorrichtung nach Anspruch 9, umfassend außerdem Mittel zum Abkühlen der Nahrungsmittel nach dem Blanchieren.

## Claims

1. A method for processing food products, such as, notably, vegetables loaded with impurities, for example fertilisers and/or pesticides, wherein:
- a flow of said food products is provided, driven on a support (1 ),
- said products are sprayed with a processing liquid, capable of being loaded with said impurities,
- the impurity ratio present in said processing liquid is adjusted after spraying and it is re-circulated.

2. A method according to claim 1, wherein different successive spraying steps (A, B, C) are provided, the liquid loaded with impurities, coming from respectively each spraying steps (A, B, C), is collected in different so-called de-concentration zones (3, 4, 5) and said impurity ratio is adjusted, for every zone, before re-circulating the processing liquid.

3. A method according to claim 2, wherein the liquid from each de-concentration zone (3, 4, 5) is re-circulated respectively towards the spraying step (A, B, C) wherefrom it originates, after adjusting its impurity ratio.

4. A method according to claim 2, wherein said impurity ratio is adjusted by adding liquid from a downstream de-concentration zone and/or clean liquid.

5. A method according to claim 2, wherein said processing liquid is provided as heated in order to bleach said food products simultaneously to spraying.

6. A method according to claim 5, wherein the temperature of the processing liquid is adjusted in relation to the spraying step wherein it is used.

7. A method according to claim 5, wherein said food products are cooled down after bleaching.

8. A method according to claim 7, wherein the flow of products is de-compacted and/or its thickness is reduced at least at the transition between bleaching and cooling down.

9. A device for implementing the method according to claim 1 for food products such as, notably, vegetables loaded with impurities, for example, fertilisers and/or pesticides, comprising:
- means (9) for spraying a flow of said food products driven on a support (1) of a processing liquid, capable of being loaded with said impurities,
- means (10) for adjusting the impurity ratio present in said processing liquid after spraying,
- means (11) for re-circulating the processing liquid after adjusting its impurity ratio.

10. A device according to claim 9, comprising successive spraying compartments (A, B, C), fitted with said means for spraying (9), communicating with de-concentration tubs (3, 4, 5) to collect the liquid loaded with impurities, coming respectively from each of said compartments (A, B, C), said means for adjusting (10) the impurity ratio being provided in each of said tubs (3, 4, 5).

11. A device according to claim 10, wherein said means (10) for adjusting the impurity ratio are composed of a clean liquid supply duct at least arranged at said tub (5) for collecting the liquid from the most downstream compartment C.

12. A device according to claim 11, wherein said means (10) for adjusting the impurity ratio are composed moreover of said tubs (3, 4, 5) arranged capable of enabling the communication of the processing liquid from the downstream tubs to the upstream tubs.

13. A device according to claim 10, wherein said means (10) for adjusting the impurity ratio are composed moreover of valves (16), co-operating with said tubs (3, 4, 5) and arranged capable of controlling their emptying.

14. A device according to claim 10, wherein said re-circulation means (11) are provided between each compartment (A, B, C) and the corresponding tub (3, 4, 5).

15. A device according to claim 9, comprising moreover means for heating the processing liquid for bleaching said products.

16. A device according to claim 15, each comprising moreover means for cooling down the food products after bleaching.
